# EUROPÄISCHE PATENTSCHRIFT

(11) **EP 0 668 402 B1**
(45) Veröffentlichungstag und Bekanntmachung des Hinweises auf die Patenterteilung: **06.05.1998**
(21) Anmeldenummer: 95102279.7
(22) Anmeldetag: 17.02.1995
(51) Int. Cl.: E01H 1/08, A01G 1/12

(54) **Sammelvorrichtung für Kehrgut oder dergleichen**
Collecting container for sweepings and the like
Récipient collecteur pour les balayures ou les matières similaires

(30) Priorität: 29.12.1994 DE 4447159; 18.02.1994 DE 4405219
(43) Veröffentlichungstag der Anmeldung: 23.08.1995
(73) Patentinhaber: Wiedenmann GmbH, D-89192 Rammingen Krs. Ulm (DE)
(72) Erfinder:
(74) Vertreter: Flügel, Otto, Dipl.-Ing.

(56) Entgegenhaltungen:
- EP-A- 0 342 504
- DE-A- 2 339 584
- DE-A- 4 228 574
- US-A- 4 006 511

## Beschreibung

Die Erfindung betrifft eine Sammelvorrichtung für Kehrgut oder dgl., vorzugsweise für Verunreinigungen, wie Staub, Sand, Split, Pflanzenteile, bspw. abgemähtes Gras oder Laub oder dgl., mit einem Behälter, der eine Eingangsöffnung und eine Entleerungseinrichtung aufweist, wobei die Eingangsöffnung vorzugsweise über einen Förderkanal mit einem Kehrkopf verbunden ist.

Derartige Sammelvorrichtungen sind aus dem Stand der Technik bekannt. Sie sind entweder als sogenannte Huckepackaggregat oder als Anhänger für Traktoren, Schlepper oder andere Fahrzeuge ausgebildet. An derartige Sammelvorrichtungen wird insbesondere die Anforderung gestellt, daß sie in einfacher Weise befüllbar und entleerbar sind. Hierbei hat es sich jedoch erwiesen, daß für unterschiedliches Kehrgut unterschiedliche Sammelvorrichtungen notwendig sind. Insbesondere spielen hierbei die charakteristischen Eigenschaften des Kehrgutes eine bedeutende Rolle. Hierunter fallen Korngröße, Kornverteilung sowie Art und Feuchtigkeit des Kehrgutes.

Die US-A-4 006 511 beschreibt eine Sammelvorrichtung,die bei nassem Betrieb ein Umschalten mittels einer verschließbaren zusätzlichen Öffnung vor dem Filter ermöglicht, um den Filter vor nassem Material zu schützen. Diese Öffnung, wie auch die andere zusätzliche gezeigte Öffnung weisen Kein Lochblech auf, stattdessen wird eine Art Gitter über dem Behälterquerschnitt der Sammelvorrichtung beschrieben.

Ausgehend von diesem Stand der Technik liegt der Erfindung die **Aufgabe** zugrunde, eine Sammelvorrichtung der gattungsgemäßen derart auszubilden, daß die Sammelvorrichtung für ein breites Spektrum von Kehrgut einsetzbar, d.h. in einfacher Weise auf die bestimmten Anforderungen verschiedenen Kehrgutes umrüstbar ist.

Diese Aufgabe wird mit den Merkmalen des Anspruchs 1 gelöst.

Eine derart ausgebildete Sammelvorrichtung ist sowohl für die Aufnahme von Kehrgut in Form von trockenem Staub, wie er in staubhaltiger Luft vorliegt, als auch für die Aufnahme von feuchter staubhaltiger Luft geeignet. Darüberhinaus kann mit der erfindungsgemäßen Sammelvorrichtung sowohl trockenes als auch nasses Gras bzw. Laub gesammelt werden, ohne daß die Aufnahme derartigen Kehrgutes zu Beeinträchtigungen der Betriebsweise der Sammelvorrichtung führt. Soll bspw. trockener Staub in Verbindung mit Luft in der Sammelvorrichtung aufgenommen werden, so wird die erste Öffnung verschlossen, so daß das staubförmige Kehrgut in der Filtereinrichtung in Staub und gefilteter Luft getrennt wird. Die Staubpartikel werden hierbei von der Filtereinrichtung im Inneren des Behälters zurückgehalten, wogegen die von den Staubpartikeln mittels der Filtereinrichtung befreite Luft über die zweite Öffnung aus dem Behälter entweichen kann. Soll demgegenüber feuchte staubhaltige Luft in die Sammelvorrichtung eingespeist werden, so wird die erste Öffnung geöffnet, so daß das in dieser Öffnung befindliche Lochblech als Grobsieb dient. Steine und gröbere Partikel bleiben damit im Behälter, wogegen die feuchte staubhaltige Luft praktisch vollständig durch das Lochblech unterhalb der Verschließeinrichtung der ersten Öffnung entweicht. Die Filtereinrichtung wird auf diese Weise nicht von feuchter Luft beaufschlagt, so daß eine Beeinträchtigung der Funktion der Filtereinrichtung durch die Feuchtigkeit der Luft nicht gegeben ist. Schließlich kann mit der erfindungsgemäßen Sammelvorrichtung auch nasses oder trockenes Gras bzw. Laub gesammelt werden. Hierzu wird die Filtereinrichtung vollständig aus dem Behälter entfernt, so daß ein Zusetzen der Filtereinrichtung mit Pflanzenteilen vermieden wird. Die erste Öffnung des Behälters bleibt bei dieser Betriebsweise verschlossen.

Nach einer Weiterbildung der erfindungsgemäßen Sammelvorrichtung ist vorgesehen, daß der Behälter in zwei Hälften unterteilt ist, von denen eine eine Falle zum Verschließen des Behälters bildet, welche um einen Drehpunkt schwenkbeweglich an der anderen Hälfte angelenkt ist. Derart ausgebildet wird eine leichte Entleerbarkeit des Behälters erzielt, wobei lediglich die die Falle aufweisende Hälfte des Behälters relativ zur gegenüberliegenden Hälfte verschwenkt wird. Die Bewegung der beiden Hälften relativ zueinander kann hierbei mechanisch, hydraulisch oder pneumatisch ausgeführt werden.

Um das Eindringen von Feuchtigkeit in Form von Niederschlägen in den Behälter, insbesondere im Bereich der Filtereinrichtung zu vermeiden, kann vorgesehen sein, daß die zweite Öffnung von einem Blech oder dgl. überdeckt ist, welches im Abstand zur zweiten Öffnung am Behälter angeordnet ist. Dieses Blech dient somit als Regenabdeckung.

Es ist bei der erfindungsgemäßen Sammelvorrichtung nach einer Ausführungsform ferner vorgesehen, daß die Filtereinrichtung aus einem herausnehmbaren Filterplattenrahmen besteht, in dem mehrere Filterelemente derart angeordnet sind, daß die zweite Öffnung vollständig durch Filterelemente abgedeckt ist. Auf diese Weise wird eine große Filterfläche erzielt, die eine hohe Filterleistung beim Ansaugen von trockener staubhaltiger Luft aufweist.

Eine konstruktive Vereinfachung des erfindungsgemäßen Sammelbehälters wird in einer Vorteilhaften Ausgestaltung dadurch erzielt, daß das zweite Lochblech derart schwenkbar innerhalb des Behälters angeordnet ist, daß es zwischen einer, die zweite Öffnung bei herausgenommener Filtereinrichtung abdeckender und einer weiteren Stellung verschwenkbar ist, bei der das Lochblech zwischen den Öffnungen, die Filtereinrichtung gegen Kehrgut abdeckend angeordnet ist. Das zweite Lochblech hat insbesondere die Aufgabe, bei eingesetzter Filtereinrichtung diese vor härterem Kehrgut, wie Steine, Glaspartikel oder dgl. vor Beschädigungen zu schützen. Ist die Filtereinrichtung für den Einsatz bei der Aufnahme von nassem oder trockenem Gras bzw. Laub aus dem Behälter demontiert, so kann das zweite Lochblech derart verschwenkt werden, daß die zweite, für die Aufnahme der Filtereinrichtung vorgesehene Öffnung durch dieses Lochblech abgedeckt wird. Hierdurch wird vermieden, daß das in dem Behälter gesammelte Gras oder Laub durch diese Öffnung entweichen kann. Das zweite Lochblech dient somit ebenfalls als Grobsieb.

Vorzugsweise sind die zwei Öffnungen im oberen Deckel des Behälters angeordnet, da hierdurch besonders vorteilhafte Strömungsverhältnisse für den Abzug der in den Behälter eingesaugten Luft geschaffen werden. Die beiden Öffnungen sind in vorteilhafter Weise im wesentlichen flächengleich und hinter- bzw. nebeneinander angeordnet, wobei nach einem weiteren Merkmal vorgesehen ist, daß zwischen den beiden Öffnungen eine Deckelplatte schwenkbeweglich angeordnet ist, die alternativ als Verschluß für eine der Öffnungen dient. Somit ist eine fehlerfreie Handhabung der erfindungsgemäßen Sammelvorrichtung dadurch möglich, daß die Deckelplatte entweder über der ersten oder über der zweiten Öffnung angeordnet ist. Das Verschließen beider Öffnungen, was zu einem Druckanstieg innerhalb des Behälters führen würde, ist auf diese Weise ausgeschlossen.

Um einen möglichst langen wartungsfreien Betrieb der Filtereinrichtung zu gewährleisten, kann vorgesehen sein daß an der Filtereinrichtung eine Rüttelvorrichtung angeordnet ist, die elektrisch, hydraulisch oder manuell bedienbar ist. Diese Rüttelvorrichtung dient dazu, die in den Filterplatten der Filtereinrichtung angesammelten Staubpartikel durch Vibrationen aus den Filterplatten zu entfernen, so daß diese ebenfalls bei der nächsten Entleerung des Behälters entsorgt werden.

Um Beschädigungen an dem innerhalb des Behälters angeordneten Einrichtungen wie Lochblechen, Filtereinrichtung oder dgl. möglichst zu vermeiden, ist nach einer Ausführungsform vorgesehen, daß innerhalb des Behälters zumindest ein herausnehmbares Prallblech angeordnet ist, mit dem die in den Behälter geförderten härteren Bestandteile des Kehrgutes abgebremst bzw. in ihrer Flugrichtung gerichtet werden, so daß hierdurch die kinetische Energie der Partikel reduziert und das Auftreffen der Partikel auf leicht zu beschädigende Bauteile verhindert wird.

Schließlich ist bei der erfindungsgemäßen Sammelvorrichtung alternativ vorzugsweise vorgesehen, daß der Behälter entweder auf einem als Anhänger ausgebildeten Fahrgestell angeordnet ist oder daß der Behälter als Anbauaggregat für einen Schlepper, Traktor oder dgl. Fahrzeug ausgebildet ist. Bei der zweiten Alternative handelt es sich demzufolge um ein sogenannte Huckepackgerät.

Weitere Merkmale und Vorteile der Sammelvorrichtung werden in der nachfolgenden Beschreibung der zugehörigen Zeichnung anhand eines Ausführungsbeispiels dargestellt. In der, ein Kehrgerät zeigenden Zeichnung zeigt:
- Figur 1: eine schematisch dargestellte Seitenansicht eines Kehrgeräts;
- Figur 2: eine erste Draufsicht auf eine Zwischenachs-Kehreinrichtung für einen Traktor;
- Figur 3: eine zweite Draufsicht auf die Zwischenachs-Kehreinrichtung für einen Traktor gemäß Figur 2;
- Figur 4: eine schematische Draufsicht auf einen Teil der Zwischenachs-Kehreinrichtung für einen Traktor gemäß den Figuren 2 und 3;
- Figur 5: eine erste Ausführungsform eines erfindungsgemäßen Kehrgerätes mit einem Traktor in Draufsicht;
- Figur 6: eine zweite Ausführungsform des erfindungsgemäßen Kehrgeräts mit einem Traktor in einer Draufsicht;
- Figur 7: eine dritte Ausführungsform des erfindungsgemäßen Kehrgeräts mit einem Traktor in einer Draufsicht und
- Figur 8: eine vierte Ausführungsform des erfindungsgemäßen Kehrgeräts mit einem Traktor in einer Draufsicht.

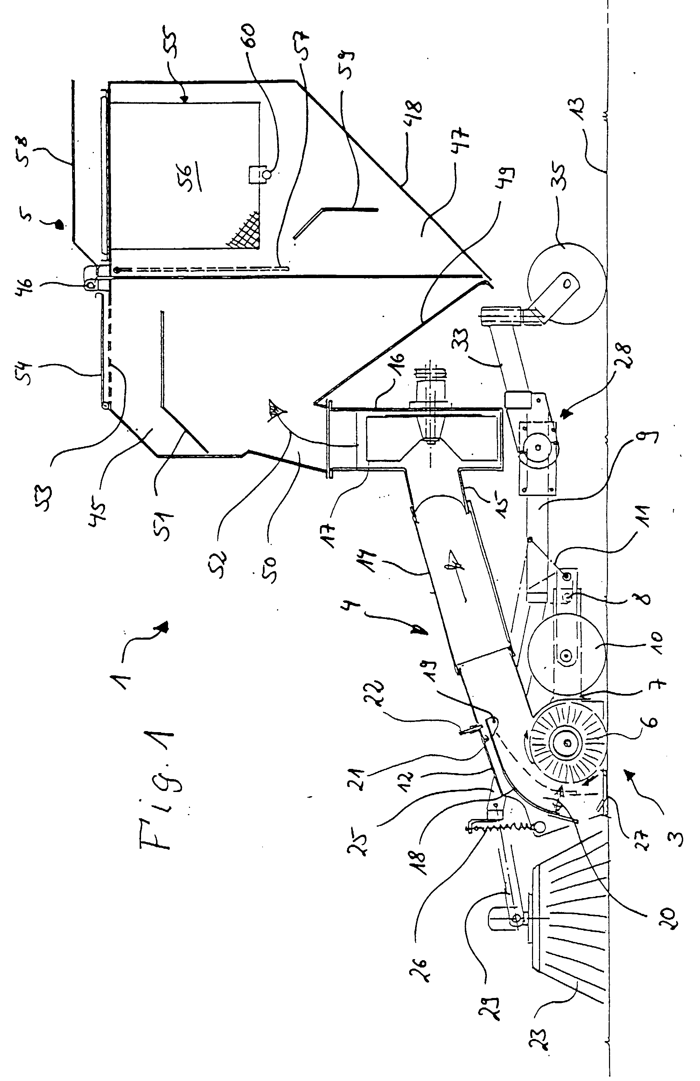

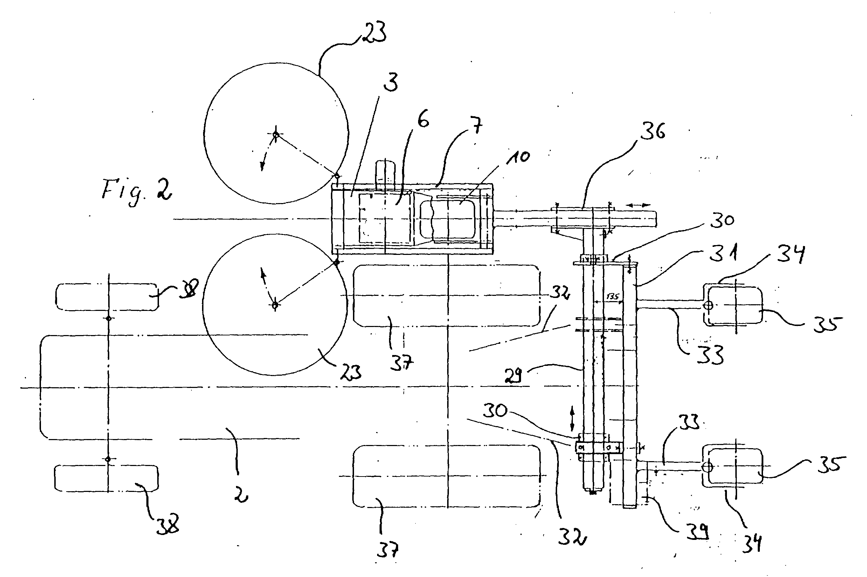

In der Figur 1 ist ein Kehrgerät 1 in einer schematischen Seitenansicht dargestellt. Das Kehrgerät ist als Anbauaggregat für einen Traktor 2 (Figur 2) ausgebildet und besteht aus einem Kehrkopf 3, einem Förderkanal 4 und einer als Sammelbehälter 5 ausgebildeten Aufnahmevorrichtung. Diese Bauteile werden im Nachfolgenden noch genauer beschrieben.

Der Kehrkopf 3 weist eine rotierend angetriebene Kehrwalze 6 auf, die drehbar in einer verdrehweichen Kehrkopfanlenkung 7 gehalten ist und um ein Gelenk 8 schwenkbar an einen Kehrkopfrahmen 9 befestigt ist.

An der Kehrkopfanlenkung 7 ist ferner ein Tast- und Tragrad 10 befestigt, das ebenfalls um das Gelenk 8 schwenkbar und über einen Lenker 11 mit dem Kehrkopfrahmen 9 verbunden ist.

Oberhalb der Kehrwalze 6 weist der Kehrkopf 3 ein Saugrohr 12 auf, das zur Kehrwalze 6 offen ausgebildet ist und im wesentlichen vor der Kehrwalze 6 in Richtung auf eine Aufstandsfläche 13 für das Kehrgerät 1 mündet. An das Saugrohr 12 schließt sich ein flexibler Schlauch 14 an, der das Saugrohr 12 mit einem Stutzen 15 eines Gebläsegehäuses 16 verbindet, in dem ein Sauggebläse 17 angeordnet ist. Das Gebläsegehäuse 16 ist ausgangsseitig mit dem Sammelbehälter 5 verbunden. Das Saugrohr 12, der Schlauch 14 und das Gebläsegehäuse 16 bilden den Förderkanal 4, durch den das von der Kehrwalze 6 in die Ansaugöffnung des Saugrohres 12 geworfenes Kehrgut zum Sammelbehälter 5 gefördert wird. Die Förderung des Kehrgutes wird hierbei maßgeblich von den im Gebläsegehäuse 16 angeordneten Sauggebläse 17 durchgeführt. Dieses Sauggebläse 17 erzeugt einen Unterdruck im Förderkanal 4.

Innerhalb des Saugrohres 12 ist ein Leitblech 18 um einen Schwenkpunkt 19 drehbar angeordnet, welches den Querschnitt des Saugrohres 12 in einem Förderkanal 20 und einen Luftnebenkanal 21 unterteilt, wobei der Luftnebenkanal 21 parallel zum Förderkanal 20 verläuft und bei Betrieb des Kehrgerätes 1 im wesentlichen frei von Kehrgut und anderen Verunreinigungen, mit Ausnahme von angesaugtem Staub bleibt. Das Leitblech 18 ist derart um den Schwenkpunkt 19 verschwenkbar im Kehrkopf 3 angeordnet, daß die Eingangsquerschnittsfläche des Saugrohres 12 bzw. des Saugkanals derart einstellbar ist, daß eine Veränderung der Eingangsquerschnittsfläche des Förderkanals 20 eine Veränderung der Eingangsquerschnittsfläche des Luftnebenkanals 21 nach sich zieht. In der Figur 1 sind zwei Stellungen des Leitbleches 18 durch durchgezogene bzw. gestrichelte Linien dargestellt.

Ferner ist an dem Saugrohr 12 im Bereich des Schwenkpunktes 19 ein Schieber 22 angeordnet, mit dem der Querschnitt des Luftnebenkanals 21 ausgangsseitig variierbar ist.

Das in Figur 1 dargestellte Kehrgerät 1 hat darüberhinaus in seinem Frontbereich als Tellerbürsten ausgebildete Seitenbesen 23, die, wie in Figur 2 erkennbar ist, seitlich vor der Kehrwalze 6 angeordnet sind und seitlich neben der Kehrwalze befindliches Kehrgut in den Bereich der Kehrwalze 6 fördern, von wo aus das Kehrgut über den Förderkanal 4 dem Sammelbehälter 5 zugeführt wird. Die Seitenbesen 23 sind über Lenker 24 verschwenkbar an einem Träger 25 angeordnet, der mit dem Kehrkopfrahmen 5 verbunden ist.

Zwischen dem Träger 25 und dem Saugrohr 12 sind Entlastungsfedern 26 vorgesehen, mit denen die Kehrkopfanlenkung 7 zusammen mit der Kehrwalze 6 und dem Tast- und Tragrad 10 relativ zum Kehrkopfrahmen 9 um das Gelenk 8 in Richtung auf die Aufstandsfläche 13 verschwenkt wird. Zum Ausgleich der Verschwenkbewegung, welche durch die Entlastungsfedern 26 hervorgerufen wird, weist der Kehrkopf 3 als Kufen 27 ausgebildete Führungselemente auf, die den Kehrkopf 3 bei Überfahren eines Hindernisses mit der Kraft der Entlastungsfedern 26 anheben und um das Gelenk 8 relativ zum Kehrkopfrahmen 9 verschwenken. Zu diesem Zweck ist der Schlauch 14 des Förderkanals 4 entsprechend in seiner Längsrichtung teleskopierbar ausgebildet, so daß beim Anheben des Kehrkopfes 3 eine Verkürzung des Förderkanals 4 vorgenommen werden kann.

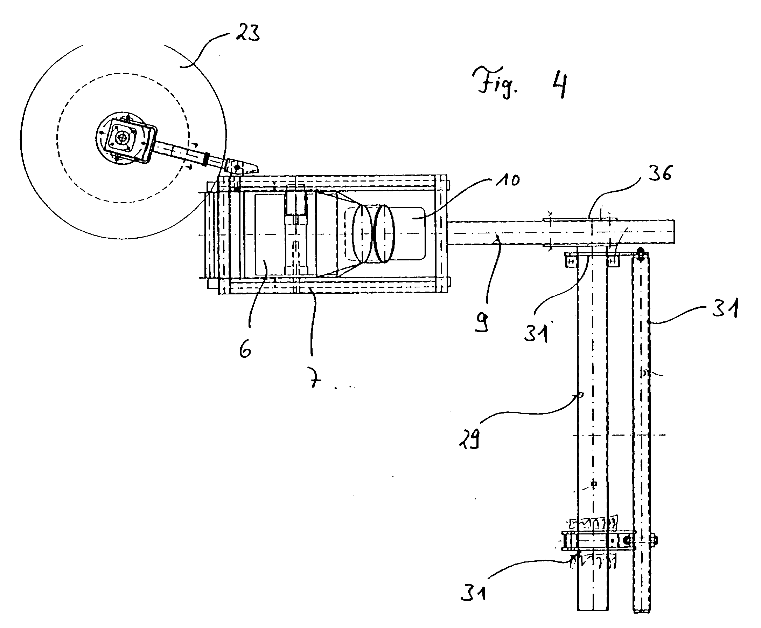

Der Kehrkopfrahmen 9 ist an einer Aufhängung 28, wie sie nachfolgend noch in bezug auf die Figuren 2 bis 4 beschrieben wird, angeordnet.

Diese Anlenkung 28 dient zur lösbaren Befestigung des Kehrgerätes 1 an dem Traktor 2 und weist ein Zentralrohr 29 auf, welches als Schwenkachse ausgebildet ist und in Schwenkhalterungen 30 gelagert ist. Die Schwenkhalterungen 30 sind verdrehfest mit einem Träger 31 verbunden, der Bestandteil des an dem Traktor 2 über Lenker 32 angelenkten Rahmens des Kehrgerätes 1 sind. Das Zentralrohr 29 ist demzufolge relativ zum Träger 31 verdrehbar angeordnet, wobei sowohl der Träger 31 als auch das Zentralrohr 29 im rechten Winkel zur Längsachse des Traktors 2 angeordnet sind.

Der Rahmen, welcher den Träger 31 aufweist, dient als Grundrahmen für den Sammelbehälter 5. An dem Träger 31 sind parallel zur Längsachse des Traktors 2 verlaufende Träger 33 angeschweißt, die an ihren freien Enden Aufnahmen 34 mit im wesentlichen U-förmiger Ausbildung aufweisen, in denen Stütz- oder Nachlaufräder 35 angeordnet sind.

Das Zentralrohr 39 ist drehbar in den Schwenkhalterungen 30 gelagert. Die Drehung erfolgt stufenlos mittels eines Hydraulikantriebs. Darüberhinaus ist das Zentralrohr 29 in seiner Achsrichtung verschiebbar in den Schwenkhalterungen 30 gelagert, so daß das Zentralrohr 29 parallel und relativ zum Träger 31 verschiebbar ist. An seinem dem Kehrkopfrahmen 9 zugewandten Ende trägt das Zentralrohr 29 eine Klemmhalterung 36, in welcher der Kehrkopfrahmen 9 stufenlos in Richtung seiner Längserstreckung verstellbar ist.

Durch diese Ausbildung kann das Kehrgerät 1 an verschiedene Spurweiten und Radstände verschiedener Traktoren 2 dadurch angepaßt werden, daß das Zentralrohr 29 in Abhängigkeit der Spurweite bspw. der Hinterräder 37 des Traktors und durch die Verschiebung des Kehrkopfrahmens 3 in der Klemmhalterung an den Radstand zwischen den Hinterrädern 37 und den Vorderrädern 38 des Traktors 2 angepaßt wird. Die Verstellung des Kehrkopfrahmens 9 in der Klemmhalterung 36 erfolgt hierbei mechanisch, wogegen die Verstellung des Zentralrohrs 29 in Richtung seiner Achse hydraulisch erfolgt. Der Grund hierfür liegt darin, daß die Verstellung des Zentralrohres 29 in Richtung seiner Längsachse auch dann notwendig sein kann, wenn das Kehrgerät 1 entsprechend bestimmter Parameter der zu kehrenden Fläche eingestellt werden soll. Beispielsweise erfolgt eine Einstellung des Kehrgerätes 1 hinsichtlich einer für den Traktor 2 nicht befahrbaren Fläche, die vollständig gekehrt werden soll. Demgegenüber ist die Anpassung des Kehrkopfrahmens 9 bezüglich der Klemmhalterung 36 nur bei der Montage des Kehrgerätes 1 an dem Traktor 2 in bezug auf den Radstand notwendig.

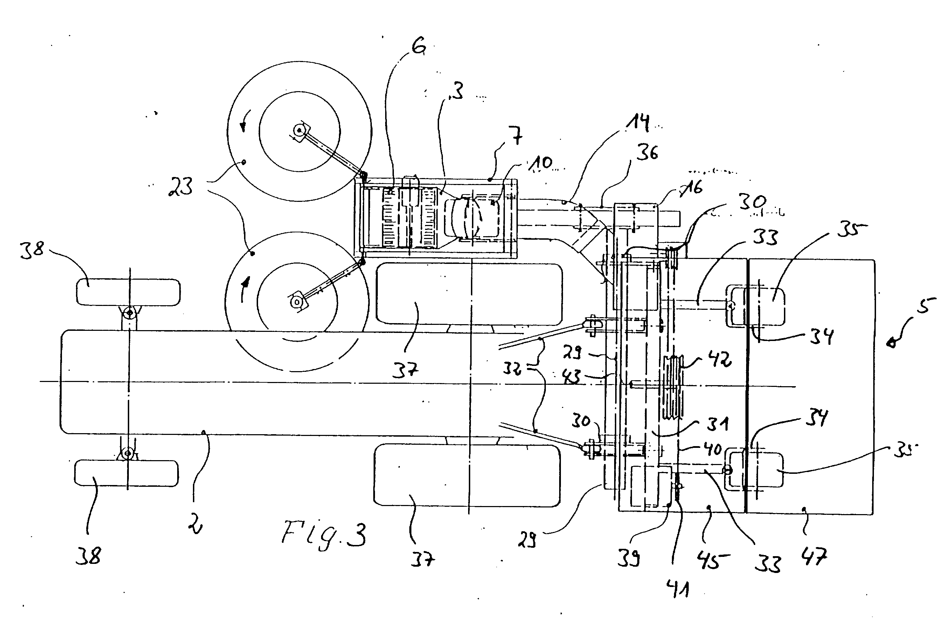

Wie insbesondere aus der Figur 3 zu erkennen ist, erfolgt der Antrieb des für die Verstellung des Zentralrohres 29 notwendigen Hydraulikaggregates 39 über einen Keilriemen 40, der über eine Keilriemenscheibe 41 des Hydraulikaggregats 39 und über eine Keilriemenscheibe 42 läuft, welche zusammen mit weiteren Keilriemenscheiben auf einer Welle 43 drehfest befestigt ist, die mit einer nicht dargestellten Zapfwelle des Traktors 2 verbindbar ist. Weitere Keilriemenscheiben, die auf dieser Welle 43 aufgesetzt sind, sind über Keilriemen 44 mit Keilriemenscheiben verbunden, die auf der Antriebsachse des Gebläses 17 angeordnet sind.

Der Antrieb des Motors der Kehrwalze 6 sowie der Motoren der Seitenbesen 23 erfolgt hydraulisch, wobei das Hydraulikaggregat 39 als Hydraulikpumpe ausgebildet ist, welche ein Fluidstrom über nicht dargestellte Leitungen zu den Motoren der Kehrwalze 6 und der Seitenbesen 23 fördert. Es sei an dieser Stelle erwähnt, daß die Seitenbesen 23 schwenkbar am Träger 25 befestigt sind, so daß die Breite der mit dem Kehrgerät 1 zu kehrenden Fläche in begrenztem Maße einstellbar ist.

Das Stütz- oder Nachlaufrad 35 kann gegenüber dem Rahmen nach unten auf Druck beaufschlagt werden. Dies erfolgt bspw. hydraulisch, so daß sich der Rahmen mit Kehrwalze 6 und den Seitenbesen 23 abhebt, um Unebenheiten, bspw. Bordsteine oder dgl. zu überfahren. In dieser Stellung wird aber auch eine Transportstellung eingenommen, wie sie auch durch Verdrehen des Zentralrohres 29 in den Schwenkhalterungen 30 ermöglicht wird. Eine weitere Anpassungsfähigkeit für die Kehrwalze 6 ist durch die schwimmende Aufhängung an dem Kehrkopfrahmen 9 gegeben, die aus entsprechenden Lenkern mit hinterem Drehpunkt, den Kufen 27 und den Entlastungsfedern 26 gebildet ist, die die Bürste nach oben anheben. Der Kehrkopfrahmen 9 sitzt zu diesem Zwecke selbst an dem Tast- und Tragrad 10, so daß er in einfacher Weise an Bodenverhältnisse anpassbar geführt ist und sich insoweit selbst trägt. Die Achse dieses Tast- und Tragrades 10 liegt etwa in derselben Vertikalebene, wie die Achse der Stütz- oder Nachlaufräder 35. Hierdurch ist die Verwendung eines nicht gelenkten Tast- oder Tragrades 10 möglich.

Nachfolgend wird der in Figur 1 dargestellte Sammelbehälter 5 detailliert beschrieben.

Der Sammelbehälter 5 besteht aus einem Behälterteil 45 und einem daran schwenkbeweglich über eine Schwenkachse 46 angelenkten, den Behälterteil 45 verschließenden Fallenteil 47, wobei Behälterteil 45 und Fallenteil 47 jeweils ein unter einem Winkel zur Aufstandsfläche 13 verlaufendes Bodenblech 48 bzw. 49 aufweisen, das bei geöffnetem Fallenteil 47 ein problemloses Herausrutschen des in den Sammelbehälter 5 angesammelten Kehrgutes ermöglicht.

Der Behälterteil 45 des Sammelbehälters 5 weist einen Eingangsstutzen 50 auf, der an dem Ausgangsstutzen des Gebläsegehäuses 16 angeschlossen ist. Oberhalb des Eingangsstutzens 50 ist ein erstes herausnehmbares Prallblech 51 angeordnet, daß das in Richtung des Pfeils 52 in den Sammelbehälter 5 einströmende Kehrgut in Richtung auf den Fallenteil 47 leitet.

Ferner weist der Behälterteil 45 in seinem oberen Abschlußblech ein Lochblech 53 auf, welches oberhalb des Prallblechs 51 angeordnet und von diesem fast vollständig abgedeckt ist, wobei zwischen dem Prallblech 51 und dem Lochblech 53 ein Abstand besteht. Das Lochblech 53 ist außenseitig des Sammelbehälters 5 mit einem verschwenkbar an der Außenseite des Sammelbehälters 5 befestigten Leitblech 54 verschließbar.

Der Fallenteil 47 weist in seinem oberen Teil eine Öffnung auf, in die eine Filtereinrichtung 55 einsetzbar ist. Diese Filtereinrichtung 55 besteht aus einem Filterplattenrahmen mit einer Vielzahl von sogenannten Filterplatten 56, die in Form einer Doppelplatte ausgebildet sind und die Öffnung im Fallenteil 47 derart abdecken, daß die in den Sammelbehälter 5 einströmende Luft nur über die Filtereinrichtung 55 aus dem Fallenteil 47 entweichen kann.

Im Bereich der Filtereinrichtung 55 ist innerhalb des Fallenteils 47 eine schwenkbare Lochwand 57 angeordnet. Diese Lochwand kann entweder parallel zu der Trennfuge zwischen Behälterteil 45 und Fallenteil 47, d.h. lotrecht angeordnet sein, oder bei herausgenommener Filtereinrichtung 55 die Öffnung für die Filtereinrichtung 55 verschließen.

Oberhalb der Öffnung für die Filtereinrichtung 55 weist der Fallenteil 47 eine als Regenabdeckung dienende Platte 58 auf, die ebenfalls schwenkbar befestigt sein kann. Schließlich ist in dem Fallenteil 47 ein zweites herausnehmbares Prallblech 59 derart angeordnet, daß es das in Richtung des Falz 52 einströmende und von dem ersten Prallblech 51 umgelenkte Kehrgut in Richtung auf eine Entleerungseinrichtung zwischen Behälterteil 45 und Fallenteil 47 leitet. Das Prallblech 59 ist unterhalb der Filtereinrichtung 55 angeordnet.

Die Filterplatten 56 können mit einer Rütteleinrichtung 60 versehen sein, die elektrisch oder hydraulisch betätigt werden kann, ggfs. ist auch eine Betätigung von Hand denkbar, bei deren Betätigung außerhalb der Betriebsphasen der Staub von den Außenflächen der Filterplatten 56 abgeschüttelt wird und in den unteren Teil des Sammelbehälters fällt.

Die verschiedenen Betriebsweisen des voranstehend beschriebenen Sammelbehälters 5 werden nachfolgend erläutert.

Bei Einsatz des Kehrgerätes 1, bei welchem trockene staubhaltige Luft über den Förderkanal 4 angesaugt wird, ist das schwenkbare Leitblech 54 über dem Lochblech 53 angeordnet, so daß das Lochblech 53 gegenüber der Umgebung des Sammelbehälters 5 abgedichtet ist. Das angesaugte staubförmige Kehrgut gelangt über den Förderkanal 4 und das Sauggebläse 17 in den Behälterteil 45 und anschließend in den Bereich des Fallenteils 47, in dem die Filtereinrichtung 55 angeordnet ist. Die in Lufteinströmrichtung vor der Filtereinrichtung 55 angeordnete Lochwand 57 dient bei dieser Betriebsweise dazu, gröbere Schmutzstücke, Gras usw. nicht in den Bereich der Filtereinrichtung 55 gelangen zu lassen. Für gröbere Steine usw. ist das im unteren Bereich des Fallenteils 47 angeordnete Prallblech 59 in den Sammelbehälter 5 eingesetzt.

Bei einer weiteren Betriebsweise, bei der feuchte staubhaltige Luft angesaugt wird, ist das schwenkbare Leitblech 54 aufgeklappt, so daß das darunter befindliche Lochblech 53 als Grobsieb dient. Steine und gröbere Partikel bleiben damit ohnehin im Sammelbehälter 5, ansonsten tritt die feuchte staubhaltige Luft praktisch vollständig durch das Lochblech 53 unterhalb des aufgeklappten Leitblechs 54 aus, so daß die Filterplatten 56 nicht mit feuchter Luft beaufschlagt werden. Um den Stauwiderstand vor den Filterplatten 56 zu erhöhen, kann man deren Ausgänge verschließen. Im übrigen sind diese Ausgänge von der regenabweisenden Platte 58 überdeckt, wie dies in Figur 1 dargestellt ist. Es ist vorgesehen, daß diese Platte 58 so ausgestaltet ist, daß sie zum Verschließen der Luftöffnungen im Bereich der Filtereinrichtung 55 dienen kann. Beispielsweise ist dies dadurch erreichbar, daß die Platte 58 in einfacher Weise zwischen einer geöffneten Stellung und einer geschlossenen Stellung verschwenkbar ist. Eine weitere Ausgestaltung ist darin zu sehen, daß das schwenkbare Leitblech 54 wahlweise über dem Lochblech 53 oder über der Öffnung für die Filtereinrichtung 55 angeordnet werden kann. Insoweit verschließt das Leitblech 54 entweder das Lochblech 53 des Behälterteils 45 oder aber die Ausgänge der Filtereinrichtung 55 im Fallenteil 47. Selbstverständlich ist es auch möglich, eine derartige Verschlußeinrichtung als Schieber auszubilden, der wahlweise über das Lochblech 53 oder die Ausgänge der Filtereinrichtung 55 verfahrbar ist.

Bei einer weiteren Betriebsweise, bei der trockenes oder nasses Gras oder Laub angesaugt wird, sind die Filterplatten 56 der Filtereinrichtung 55 sämtlich aus dem Fallenteil 47 des Sammelbehälters 5 herausgenommen und die schwenkbare Lochwand 57 derart noch oben verschwenkt, daß die Öffnung für die Filtereinrichtung 55 durch die Lochwand 57 abgedeckt ist, so daß sie ähnlich wie das vordere Lochblech 53 als Grobfilter dient. Das vordere Leitblech 54 bleibt im Schließzustand, d.h. deckt das Lochblech 53 ab. Dieses vordere Leitblech 54 hat bei dieser Betriebsweise demzufolge die Aufgabe einer Füllstands- bzw. Verstopfungsanzeige, je nach dem, wie sich die Luftdruckverhältnisse in Abhängigkeit der Füllung des Behälters und/oder bei Verstopfungen einstellen. Damit kann dieser Sammelbehälter 5 aufgrund seiner Umrüstbarkeit nicht nur an einem Kehrgerät 1 sondern in anderer Anwendung auch an einem Zwischenachsmäher oder dgl. angeschlossen werden.

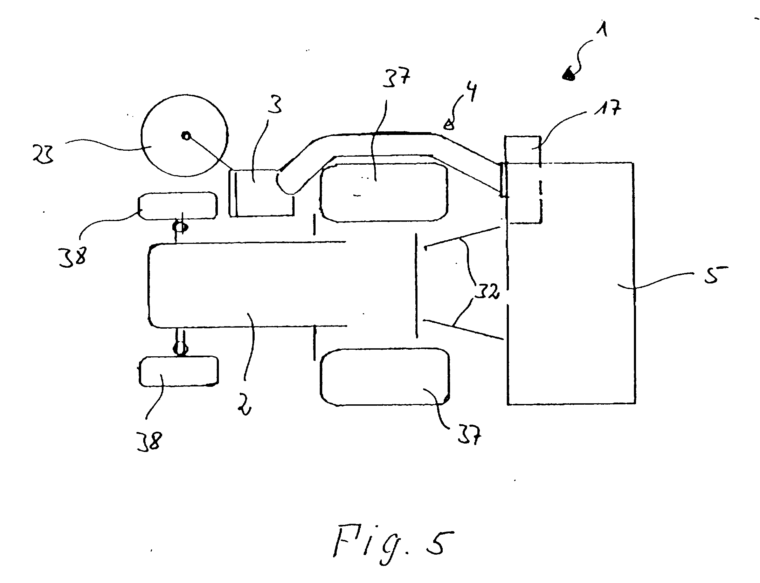

Bezugnehmend auf die Figuren 5 bis 8 zeigt die Figur 5 ein Kehrgerät 1 als Anbauaggregat eines Kleintraktors, mit einem Sammelbehälter 5, der als Huckepackgerät ausgebildet ist. Im Bereich des Sammelbehälters 5 ist das Saugebläse 17 angeordnet, welches über einen Förderkanal 4 mit einem Kehrkopf 3 verbunden ist, welcher seitlich am Traktor 2 zwischen einem Hinterrad 37 und einem Vorderrad 38 angeordnet ist. Der Kehrkopf 3 weist darüberhinaus einen Seitenbesen 23 auf, der um einen Drehpunkt relativ zum Kehrkopf 3 verschwenkbar angeordnet ist.

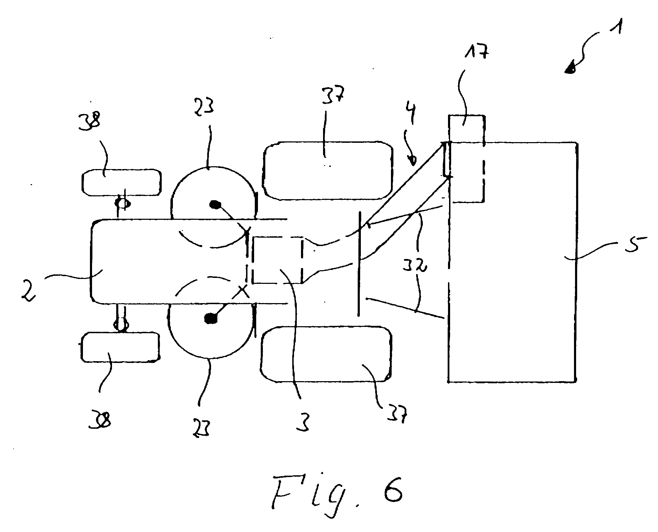

Eine weitere Ausführungsform des Kehrgeräts 1 ist in Figur 6 dargestellt. Wiederum ist an einem Traktor 2 im Heckbereich ein als Huckepackgerät ausgebildeter Sammelbehälter 5 angeordnet, der über ein Sauggebläse 17, einen Förderkanal 4 mit einem Kehrkopf 3 verbunden ist. Der Kehrkopf 3 weist zwei jeweils zwischen einem Hinterrad 37 und einem Vorderrad 38 angeordnete Seitenbesen auf, die wiederum relativ zum Kehrgerät 3 verschwenkbar angeordnet sind. Bei diesem Ausführungsbeispiel des Kehrgerätes 1 ist jedoch der Kehrkopf 3 unterhalb des Traktors 2, vorzugsweise im Bereich der Hinterachse angeordnet.

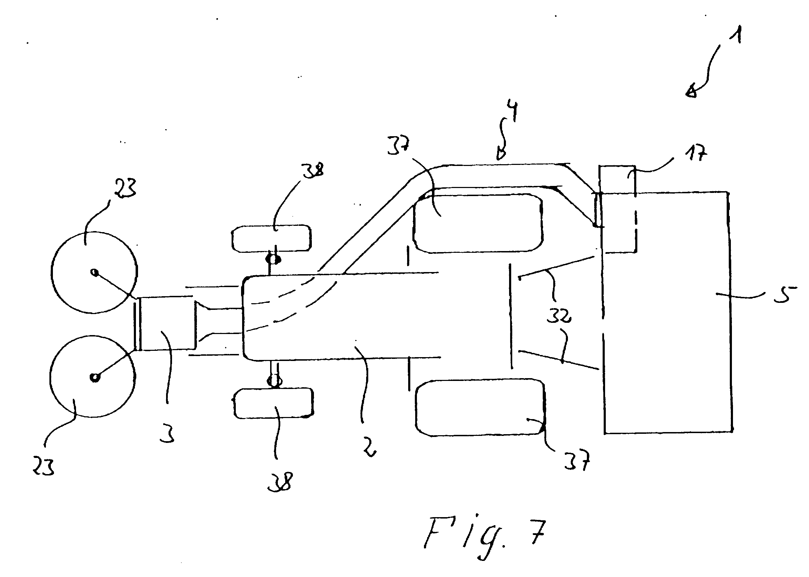

Ein weiteres Ausführungsbeispiel des Kehrgeräts 1 ist in Figur 7 dargestellt, wobei diesmal das Kehrgerät 3 im Frontbereich des Traktors 2 angeordnet und wiederum über einen Förderkanal 4 und Sauggebläse 17 mit einem als Huckepackgerät ausgebildeten Sammelbehälter 5 verbunden ist. Auch dieses Ausführungsbeispiel des Kehrgerätes 1 weist zwei relativ zum Kehrkopf 3 verschwenkbare Seitenbesen 23 auf.

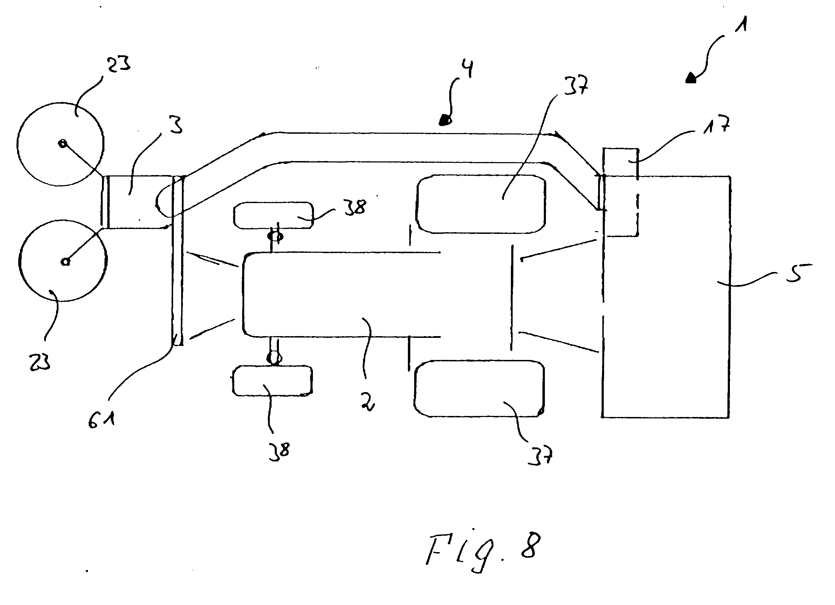

Schließlich ist in Figur 8 eine Weiterbildung des in Figur 7 dargestellten Kehrgerätes 1 gezeigt. Die vorteilhafte Weiterbildung des Kehrgerätes 1 besteht darin, daß der Kehrkopf 3 mit den Seitenbesen 23 entlang einer im Frontbereich des Traktors 2 über Lenker angeordnete Schiene 61 verschiebbar ist. Ansonsten stimmt dieses Ausführungsbeispiel des Kehrgerätes 1 mit dem Ausführungsbeispiel gemäß Figur 7 überein.

Die dargestellte Erfindung ist nicht auf die beschriebenen Ausführungsbeispiele beschränkt. Vielmehr sind Abwandlungen möglich, ohne den Schutzbereich der Erfindung zu verlassen. Beispielsweise kann der Sammelbehälter 5 als nachlaufender Anhänger, insbesondere mit Schwenkrädern ausgebildet sein, der demzufolge starr mit dem Traktor 2 verbunden ist. Der Sammelbehälter 5 kann darüberhinaus eine sogenannte Hochentleerung aufweisen. Schließlich sei an dieser Stelle darauf hingewiesen, daß die Anordnung des Kehrkopfes seitlich zwischen einem Hinter- und einem Vorderrad eines Traktors insbesondere den Vorteil hat, daß sie eine sehr kurze Schlauchführung im Bereich des Förderkanals 4 ermöglicht. Darüberhinaus ist es bei der seitlichen Anordnung des Kehrkopfes 3 von besonderem Vorteil, daß diese Anordnung in besonders einfacher Weise an einem Traktor 2 befestigbar ist und darüberhinaus eine vereinfachte Wartung zuläßt. Schließlich ist die seitlich versetzte Anordnung des Kehrkopfes 3 im Frontbereich des Traktors 2 möglich.

## Patentansprüche

1. Sammelvorrichtung für Kehrgut oder dgl., vorzugsweise für Verunreinigungen, wie Staub, Sand, Split, Pflanzenteile, bspw. abgemähtes Gras oder Laub oder dgl, mit einem Behälter (5), der eine Eingangsöffnung (50) und eine Entleerungseinrichtung (47) aufweist, wobei die Eingangsöffnung vorzugsweise über einen Förderkanal (4) mit einem Kehrkopf (3) verbunden ist, wobei
der Behälter (5) zumindest zwei zusätzliche Öffnungen hat, von denen eine erste Öffnung ein Lochblech (53) aufweist und eine zweite Öffnung die Anordnung einer Filtereinrichtung (55) oder eines weiteren zweiten Lochblechs (57) ermöglicht und wobei zumindest die erste Öffnung verschließbar ist.

2. Sammelvorrichtung nach Anspruch 1,
**dadurch gekennzeichnet,**
daß der Behälter (5) in zwei Hälften unterteilt ist, von denen eine eine Falle (47) zum Verschließen des Behälters (5) bildet, welche um einen Drehpunkt (46) schwenkbeweglich an der anderen Hälfte (45) angelenkt ist.

3. Sammelvorrichtung nach Anspruch 1,
**dadurch gekennzeichnet,**
daß die zweite Öffnung von einem Blech (58) oder dgl. überdeckt ist, welches in Abstand zur zweiten Öffnung am Behälter (5) angeordnet ist.

4. Sammelvorrichtung nach Anspruch 1,
**dadurch gekennzeichnet,**
daß die Filtereinrichtung (55) aus einem herausnehmbaren Filterplattenrahmen besteht, in dem mehrere Filterelemente (56) derart angeordnet sind, daß die zweite Öffnung vollständig durch Filterelemente (56) abgedeckt ist.

5. Sammelvorrichtung nach Anspruch 1,
**dadurch gekennzeichnet,**
daß das zweite Lochblech (57) derart schwenkbar innerhalb des Behälters (5) angeordnet ist, daß es zwischen einer die zweite Öffnung bei herausgenommener Filtereinrichtung (55) abdeckender und einer weiteren Stellung verschwenkbar ist, bei der das Lochblech (57) zwischen den Öffnungen, die Filtereinrichtung (55) gegen Kehrgut abdeckend angeordnet ist.

6. Sammelvorrichtung nach Anspruch 1,
**dadurch gekennzeichnet,**
daß die zwei Öffnungen im oberen Deckel des Behälters (5) angeordnet sind.

7. Sammelvorrichtung nach Anspruch 1,
**dadurch gekennzeichnet,**
daß die beiden Öffnungen im wesentlichen flächengleich und hinter- bzw. nebeneinander angeordnet sind.

8. Sammelvorrichtung nach Anspruch 7,
**dadurch gekennzeichnet,**
daß zwischen den beiden Öffnungen eine Deckelplatte schwenkbeweglich angeordnet ist, die alternativ als Verschluß für eine der Öffnungen dient.

9. Sammelvorrichtung nach einem der Ansprüche 1 bis 8,
**dadurch gekennzeichnet**,
daß an der Filtereinrichtung (55) eine Rütteleinrichtung (60) angeordnet ist, die elektrisch, hydraulisch oder manuell bedienbar ist.

10. Sammelvorrichtung nach einem der Ansprüche 1 bis 9,
**dadurch gekennzeichnet**,
daß innerhalb des Behälters zumindest ein herausnehmbares Prallblech (51, 59) angeordnet ist.

11. Sammelvorrichtung nach einem der Ansprüche 1 bis 10,
**dadurch gekennzeichnet**,
daß der Behälter (5) auf einem als Anhänger ausgebildeten Fahrgestell angeordnet ist.

12. Sammelvorrichtung nach einem der Ansprüche 1 bis 10,
**dadurch gekennzeichnet**,
daß der Behälter (5) als Anbauaggregat für einen Schlepper, Traktor oder dgl. Fahrzeug ausgebildet ist.

## Claims

1. A collection apparatus for sweepings or similar, preferably for rubbish and waste materials such as dust, sand, stone chippings, plant waste, especially mown grass or fallen leaves or similar, with a container (5), which has an input opening (50) and an emptying mechanism (47), wherein the input opening is preferably connected to a sweeping head (3) via a conveyor channel (4), and wherein the container (5) has at least two further openings, of which a first opening has a perforated plate (53) and a second opening allows the disposal of a filter apparatus (55) or a second perforated plate (57), and wherein at least the first opening can be closed.

2. A collection apparatus according to claim 1, characterised in that the container (5) is subdivided into two halves, of which one forms a catch (47) for closing the container (5) which is attached to the other half (45) about a point of rotation (46).

3. A collection apparatus according to claim 1, characterised in that the second opening is covered by a metal plate (58) or similar, which is disposed in the container (5) at a distance from the second opening.

4. A collection apparatus according to claim 1, characterised in that the filter apparatus (55) comprises a removeable filter sheet frame, in which several filter elements (56) are arranged in such a way that the second opening is completely covered by filter elements (56).

5. A collection apparatus according to claim 1, characterised in that the second perforated plate (57) is disposed in a swivellable manner within the container (5) in such a way that it can swivel between a position which covers the second opening, on removal of the filter apparatus (55), and a further position where the perforated plate (57) is arranged to cover the filter apparatus (55) between the openings from sweepings.

6. A collection apparatus according to claim 1, characterised in that the two openings are arranged in the upper lid of the container (5).

7. A collection apparatus according to claim 1, characterised in that the two openings are arranged next to or behind one another, with substantially equal area.

8. A collection apparatus according to claim 1, characterised in that a lid plate is arranged in a swivellable manner between the two openings which alternatively serves as a lid for one of the openings.

9. A collection apparatus according to one of claims 1 to 8, characterised in that a shaking apparatus (60), which can be either electrically, hydraulically or manually operated, is arranged at the filter apparatus (55).

10. A collection apparatus according to one of claims 1 to 9, characterised in that at least one removeable baffle plate (51, 59) is disposed within the container.

11. A collection apparatus according to one of claims 1 to 10, characterised in that the container (5) is mounted on a chassis designed as a trailer.

12. A collection apparatus according to one of claims 1 to 10, characterised in that the container (5) is designed as an attachable accessory for a tractor, or a similar vehicle.

## Revendications

1. Dispositif de ramassage pour des balayures ou des éléments analogues, de préférence pour des saletés, telles que de la poussière, du sable, des graviers, des débris végétaux, par exemple de l'herbe ou des feuilles fauchées, dispositif comprenant un récipient (5) qui présente une ouverture d'entrée (50) et un système de vidage (47), l'ouverture d'entrée étant reliée de préférence au moyen d'un canal de transfert (4) à une tête de balayage (3),
caractérisé en ce que
le récipient (5) a au moins deux ouvertures supplémentaires, dont l'une présente une tôle perforée (53) et la seconde permet la disposition d'un système de filtration (55) ou d'une seconde autre tôle perforée (57), et dans lequel au moins la première ouverture peut être fermée.

2. Dispositif de ramassage selon la revendication 1,
caractérisé en ce que
le récipient (5) est subdivisé en deux moitiés dont l'une forme une trappe (47) qui sert à fermer le récipient (5), trappe qui est articulée autour d'un point de pivotement (47) de façon à pouvoir pivoter par rapport à l'autre moitié (45).

3. Dispositif de ramassage selon la revendication 1,
caractérisé en ce que
la seconde ouverture est recouverte par une tôle (58) ou un élément analogue qui est disposé à une certaine distance de la seconde ouverture sur le récipient (5).

4. Dispositif de ramassage selon la revendication 1,
caractérisé en ce que
le système de filtration (55) consiste en un cadre de plaques de filtration, que l'on peut enlever, dans lequel plusieurs éléments de filtration (56) sont disposés d'une manière telle que la seconde ouverture soit complètement recouverte par les éléments de filtration (56).

5. Dispositif de ramassage selon la revendication 1,
caractérisé en ce que
la seconde tôle perforée (57) est disposée de façon à pouvoir pivoter à l'intérieur du récipient (5) d'une manière telle qu'elle peut pivoter entre une position recouvrant la seconde ouverture quand on a enlevé le système de filtration (55) et une autre position, dans laquelle la tôle perforée (57) est disposée entre les ouvertures en recouvrant le système de filtration (55) contre les balayures.

6. Dispositif de ramassage selon la revendication 1,
caractérisé en ce que
les deux ouvertures sont disposées dans le couvercle supérieur du récipient (5).

7. Dispositif de ramassage selon la revendication 1,
caractérisé en ce que
les deux ouvertures sont disposées sensiblement avec des surfaces identiques et l'une derrière l'autre ou l'une à côté de l'autre.

8. Dispositif de ramassage selon la revendication 7,
caractérisé en ce que
on dispose entre les deux ouvertures une plaque de recouvrement de façon pivotante qui sert alternativement de fermeture pour l'une des ouvertures.

9. Dispositif de ramassage selon l'une des revendications 1 à 8,
caractérisé en ce que
sur le système de filtration (55) on dispose un dispositif de secouage (60), que l'on peut commander de façon électrique, hydraulique ou manuelle.

10. Dispositif de ramassage selon l'une des revendications 1 à 9,
caractérisé en ce que
à l'intérieur du récipient on dispose au moins une tôle de rebondissement (51, 59), que l'on peut enlever.

11. Dispositif de ramassage selon l'une des revendications 1 à 10,
caractérisé en ce que
le récipient (5) est disposé sur un châssis de véhicule, constitué en tant que remorque.

12. Dispositif de ramassage selon l'une des revendications 1 à 10,
caractérisé en ce que
le récipient (5) est constitué sous la forme d'un sous-ensemble porté pour un véhicule de remorquage, un tracteur ou un véhicule analogue.
